# EUROPEAN PATENT SPECIFICATION

(11) **EP 3 126 370 B1**
(45) Date of publication and mention of the grant of the patent: **18.07.2018**
(21) Application number: 15711413.3
(22) Date of filing: 12.03.2015
(51) Int. Cl.: C07F 9/6574, C09K 21/12, C08K 5/527, C08K 5/5357

(54) **PROCESS OF PREPARING CYCLIC PHOSPHONATE ESTER, CYCLIC PHOSPHONATE ESTER PREPARED THEREFROM AND INDUSTRIAL APPLICATIONS CONTAINING THE SAME**
VERFAHREN ZUR HERSTELLUNG VON CYCLISCHEM PHOSPHONATESTER, DADURCH HERGESTELLTER CYCLISCHER PHOSPHONATESTER UND INDUSTRIELLE ANWENDUNG DAMIT
PROCÉDÉ DE PRÉPARATION D'ESTER DE PHOSPHONATE CYCLIQUE, ESTER DE PHOSPHONATE CYCLIQUE AINSI PRÉPARÉ ET SES APPLICATIONS INDUSTRIELLES

(30) Priority: 01.04.2014 US 201461973440 P
(43) Date of publication of application: 08.02.2017
(73) Proprietor: ICL-IP America Inc., Ardsley, NY 10502 (US)
(72) Inventor: MONTCHAMP, Jean-luc, Fort Worth, TX 76133 (US); PROST, Lucie, 26120 Malissard (FR)
(74) Representative: Fabry, Bernd
(86) International application number: PCT/US2015/020162
(87) International publication number: WO 2015/153094

(56) References cited:
- WO-A1-2010/025165
- WO-A1-2012/040074
- WO-A1-2012/168174
- US-B1- 6 284 869
- DATABASE REAXYS [Online] Elsevier; 1969, Nifant'ev et al: XP002740303,accession no. Rx-ID 688484,1099568,1099569 Database accession no. Rx-ID 688484,1099568,1099569 & NIFANT'EV E E ET AL: "Synthesis and Properties of Hydroxyalkyl Hydrophosphites", JOURNAL OF GENERAL CHEMISTRY USSR, CONSULTANTS BUREAU, NEW YORK, NY, US, vol. 39, 1 January 1969 (1969-01-01), pages 1525-1527, XP008176464, ISSN: 0022-1279
- MUNOZ A ET AL: "ONE-POT SYNTHESIS OF PHOSPHONIC ACID DIESTERS", THE JOURNAL OF ORGANIC CHEMISTRY, AMERICAN CHEMICAL SOCIETY, US, vol. 61, no. 17, 23 August 1996 (1996-08-23), pages 6015-6017, XP000598824, ISSN: 0022-3263, DOI: 10.1021/JO951308P

## Description

### FIELD OF THE INVENTION

The present invention relates to a process of preparing cyclic phosphonate esters. More particularly, the invention relates to a process of reacting glycol with at least one of phosphonic acid and phosphinic acid to produce a cyclic phosphonate ester.

### BACKGROUND OF THE INVENTION

Flame-retardant additives are often used to reduce the risk and severity of combustion. A wide variety of flame retardants are known and commercially available for this purpose. However, there are often considerable technical problems and concerns restricting the use of these flame retardants.

Neopentyleneglycol-*H*-phosphonate is one example of a flame retardant that has been made by various methods that include a base or halogenated compounds and which methods use expensive compounds and/or generate high levels of waste.

The desire, however, for a process which uses more affordable materials and/or has reduced levels of waste still remains.

JOURNAL OF GENERAL CHEMISTRY USSR, vol. 39, 1969, pages 1525-1527, JOURNAL OF ORGANIC CHEMISTRY, vol. 61, 1996, pages 6015-6017, WO 2010/025165 A1, WO 2012/040074 A1 disclose methods for preparing cyclic phosphonate esters.

### SUMMARY OF THE INVENTION

The present invention relates to a process for preparing cyclic phosphonate ester of the general formula (I): 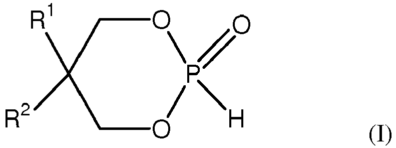 wherein R¹ and R² are each independently selected from linear or branched alkyl groups containing up to about 10 carbon atoms, optionally containing one or more heteroatom substituents, the process comprising:
reacting a glycol of the general formula (II): 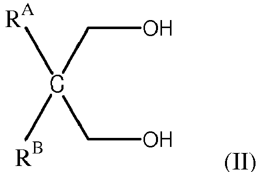 wherein R^{A} and R^{B} are each independently H or a linear or branched alkyl group containing up to about 10 carbon atoms, optionally containing one or more heteroatom substituents with at least one of phosphonic acid and phosphinic acid in the presence of a solvent, wherein if phosphonic acid is used, cyclic phosphonate ester of the general formula (I) is formed, and if phosphinic acid is used a cyclic phosphonite ester of the general formula (III): 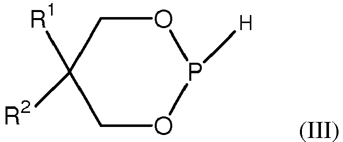 is formed,
wherein R¹ and R² are as defined, and wherein any cyclic phosphonite ester of the general formula (III) is further exposed to air to produce cyclic phosphonate ester of the general formula (I),
wherein the amount of the solvent used is 35 to 70 wt % with respect to the glycol compound (II).

### DETAILED DESCRIPTION OF THE INVENTION

In accordance with the present invention, it has unexpectedly been found that the inventive process, as described herein, is capable of being used to produce a cyclic phosphonate ester, such as the non-limiting example of neopentyleneglycol-*H-*phosphonate, which avoids the above-noted problems.

The cyclic phosphonate esters produced by the process of the invention herein are compounds of the general formula (I) as described above, and are useful as flame retardants in various industrial applications.

In one embodiment herein R¹ and R² of general formula (I) are each independently selected from linear or branched alkyl groups containing up to about 8 carbon atoms, more specifically up to about 6 carbon atoms, even more specifically up to about 4 carbon atoms, each said range optionally containing one or more heteroatom substituents.

Some non-limiting examples of R¹ and R² of general formula (I) include linear alkyl groups such as methyl, ethyl, n-propyl, n-butyl, n-pentyl, n-hexyl, and branched alkyl groups such as iso-propyl, iso-butyl, sec-butyl, tert-butyl, iso-pentyl, tert-pentyl, neo-pentyl, iso-hexyl, and the like. In one embodiment herein, R¹ and R² are both linear alkyl groups having from 1 to 9 carbon atoms, specifically from 1 to 4 carbon atoms, even more specifically wherein R¹ and R² are each methyl.

It will be understood herein that a heteroatom is any one of O, N or S.

In one non-limiting embodiment herein there is also provided a process of making cyclic phosphonate (I) comprising reacting glycol (II) with only phosphonic acid (H₃PO₃) in the presence of a solvent.

In one embodiment each of R^{A} and R^{B} in the general formula for glycol (II) is a linear or branched alkyl group of up to 8 carbon atoms, more specifically up to about 6 carbon atoms and most specifically up to 4 carbon atoms. In one non-limiting embodiment each of R^{A} and R^{B} are independently methyl or ethyl, more specifically each being methyl.

In one embodiment glycol (II) is selected from the group consisting of 1,3-propanediol, 1,3-butanediol, 2-methyl-1,3-propanediol, neopentylene glycol, 2-methyl-2-ethyl-1,3-propanediol, 2,2-diethyl-1,3-propanediol, 2-ethyl-2-propyl-1,3-propanediol, 2,2-dipropyl-1,3-propanediol, 2,2-dibutyl-1,3-propanediol, 2,2-dipentyl-1,3-propanediol, 1,3-octanediol, and combinations thereof.

As described above, if phosphinic acid (H₃PO₂) is employed in the process herein, the product is a cyclic phosphonite ester of the general formula (III) as described above, which is then further exposed to air to produce the cyclic phosphonate ester of general formula (I) described above.

If only phosphinic acid is employed in the process described herein, the reaction product will be a mixture of components, including a compound of the general formula (III) as well as other byproducts. Further reactions with a compound of the general formula (III) can also be conducted thereafter, such as the reaction with S₈ to produce a cyclic thiophosphonate ester of the general formula (IV): 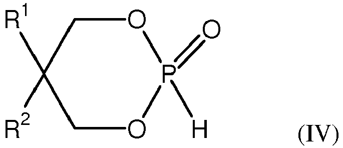 and the reaction with BH₃•SMe₂ to produce a compound of the general formula (V): 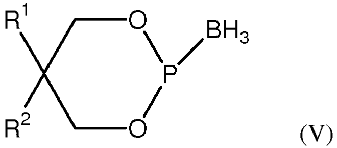 wherein Me is methyl.

It will be understood herein that if a combination of phosphonic acid and phosphinic acid is employed in the process herein that a combination of products will be obtained depending on the molar ratio of the respective acid employed. As described above, the use of phosphinic acid will produce a compound of the general formula (III) in the relative molar amount the phosphinic acid is employed, which upon exposure to air will produce cyclic phosphonate ester of the general formula (I) while the use of phosphonic acid will directly produce cyclic phosphonate ester of the general formula (I) in the relative molar amount the phosphonic acid is employed.

In one non-limiting embodiment, the reaction of phosphonic and/or phosphinic acid with glycol (II) will be in an equimolar amount, i.e., there will be an equivalent amount of moles of total phosphonic and/or phosphinic acid to moles of glycol (II). In one embodiment, the reaction may be conducted in a slight excess of either phosphonic/phosphinic acid or glycol (II), e.g., a range of molar ratios of total phosphonic/phosphinic acid to glycol (II) of from about 0.8/1 to 1.2/1, more specifically from about 0.9/1 to about 1.1/1 and even more specifically from about 0.95/1 to about 1.05/1. It will be understood herein that should only phosphonic acid or only phosphinic acid be employed herein, that the above noted ratios apply equally thereto.

In one specific embodiment herein the process can be conducted in the absence of any base. In another embodiment herein the process can be conducted to produce cyclic phosphonate of the general formula (I) without any byproduct.

In one embodiment herein, some non-limiting examples of solvents that may be employed in the process herein are hydrocarbon solvents such as hexane, cyclohexane, heptane, octane, benzene, toluene, xylene, petroleum spirit, etc.; halogen-containing hydrocarbon solvents such as chloroform, carbon tetrachloride, 1,2-dichloroethane, trichloroethane, tetrachloroethane, chlorobenzene, dichlorobenzene, etc.; ether solvents such as diisopropyl ether, dibutyl ether, 1,4-dioxane, ethylene glycol diethyl ether, etc.; and the like, among which toluene, 1,2-dichloroethane and 1,4-dioxane are more specifically employed, and toluene is most specifically employed.

The amount of the organic solvent used is 35 to 70 wt % with respect to the glycol compound (II).

The reaction may preferably be carried out by stirring a mixture of the glycol (II) and the organic solvent and adding at least one of phosphonic acid (H₃PO₃) and phosphinic acid (H₃PO₂) to the mixture.

The reaction temperature is 0 to 100° C., preferably 40 to 80° C. If the reaction temperature is lower than 0° C., it is not preferable because the reaction does not progress sufficiently. If the reaction temperature exceeds 100° C., it is not preferable because the produced product decomposes and colors.

The reaction time is typically about 3 to 8 hours, though it may be varied depending upon conditions such as the reaction temperature.

In one non-limiting embodiment herein the reaction (i.e., esterification) of phosphonic and/or phosphinic acid with glycol (II) is conducted by conducting the reaction in a Dean-Stark apparatus. A Dean-Stark apparatus is a well known set of equipment to those skilled in the art. While not wishing to be bound by theory, a Dean-Stark apparatus is designed to collect water produced in a synthetic reaction carried out under reflux. The reaction is carried out under reflux in a solvent which is less dense than water, (e.g., toluene) both immiscible with it, and which forms an azeotrope with the water, so as to enable the water formed in the reaction to be removed as an azeotrope.

In one non-limiting embodiment a Dean-Stark apparatus can comprise an inverted Claisen adapter, with a condenser at the top and a small graduated test-tube acting as a receiver directly below it. The assembly ensures that as a reaction mixture is boiled, (such as the reaction(s) described herein) the denser water is captured in the test tube, while the lighter solvent (e.g., toluene) overflows and is returned to the still pot. The receiver can be modified to include a tap at the bottom to periodically draw off the water.

In one non-limiting embodiment, the solvent employed herein may be evaporated under reduced pressure and be recycled to the process.

In one other non-limiting embodiment herein there is provided a cyclic phosphonate ester of the general formula (I) described herein which is produced by the process described herein.

The cyclic phosphonate ester of the general formula (I) may be used as a flame retardant additive in a flame retardant effective amount in a polymer to provide for flame resistance and/or flame retardancy to the polymer. The flame retardant effective amount of the cyclic phosphonate ester of the general formula (I) blended in the polymer of the present invention may be selected as appropriate depending upon the kind of a cyclic phosphonate ester (I), the kind of polymer, the use of a molded article of the polymer composition and the performance (e.g., flame retardancy, etc.) required of the molded article. In one embodiment herein the expression "effective flame retarding amount" can comprise any amount of cyclic phosphonate ester of the general formula (I) and, that can provide a flame retardant pass of California TB117 and MVSS302.

In another embodiment, the amount of the cyclic phosphonate ester (I) blended as a flame retardant may typically be 0.05 parts by weight or more, preferably 0.1 to 50 parts by weight, more preferably 5 to 20 parts by weight, with respect to 100 parts by weight of the polymer. If the blend amount of the cyclic phosphonate ester (I) is less than 0.05 parts by weight, it is not preferable because the polymer cannot be provided with sufficient flame retardancy. If the blend amount of the cyclic phosphonate ester (I) is more than 50 parts by weight, it is not preferable because it may cause a decline in properties of the polymer. In the case where the resin is polyurethane, the flame retardant may preferably be added in the step of producing polyurethane. As regards the blend amount of the flame retardant in this case, the cyclic phosphonate ester (I) may be blended in an amount within the above-mentioned range with respect to 100 parts by weight of the total amount of a polyol and a diisocyanate, which are starting materials.

As examples of the polymer which may be employed herein, may be mentioned thermoplastic resins such as chlorinated polyethylene, polyethylene, polypropylene, copolymers of polyethylene and polypropylene, polybutadiene, styrene-based resin, impact-resistant polystyrene, polyvinyl chloride, acrylonitrile-chlorinated polystyrene-styrene (ACS) resin, acrylonitrile-styrene (AS) resin, ABS resin, polyphenylene ether, modified polyphenylene ether, polymethacrylate, polyamide, polyester, polycarbonate, etc., and thermosetting resins such as polyurethane, phenolic resin, epoxy resin, melamine resin, unsaturated polyester, and the like. These polymers may be used as a mixture of two or more thereof.

Among the above-mentioned resins, those not containing a halogen may be more specifically employed.

Further, the cyclic phosphonate ester of the general formula (I) of the present disclosure can be automatically added at a constant addition rate to a polymer material or during preparation of a polymer composition for molding.

Other additives for polymers may be blended, if necessary, in the polymer composition of the present invention so long as the blending of the additives does not impair the properties of the polymer to which the flame retardancy should be given.

As such additives for polymer, may be mentioned other flame retardants than the cyclic phosphonate ester of the general formula (I), antioxidants, inorganic fillers, antistatics, ultraviolet absorbers, lubricants and the like.

The other flame retardants other than the cyclic phosphonate ester (I) which can be present in the polymer (composition) can be any liquid flame retardant which is different from that described in formula (I) but, preferably, is selected from the group consisting of, but not limited to phosphorous-based flame retardants, preferably non-halogenated phosphorous-based flame retardants, such as those selected from the group consisting of alkyl phosphates, aryl phosphates, alkyl aryl phosphates, alkaryl phosphates, aromatic bisphosphates, oligomeric phosphates, phosphonates; nitrogen-containing compounds such as melamine, ammonium polyphosphate and ammonium pyrophosphate; metal compounds such as aluminum hydroxide, magnesium hydroxide, zinc borate; and, combinations thereof.

Preferably the at least one different liquid flame retardant is selected from the group consisting of triethyl phosphate, diethyl ethylphosphonate, tris(2-butoxyethyl) phosphate, dibutyl phenyl phosphate, butyl diphenyl phosphate, 2-ethylhexyl diphenyl phosphate, isodecyl diphenyl phosphate, cresyl diphenyl phosphate, triphenyl phosphate, tricresyl phosphate, butylated or isopropylated triphenyl phosphate and combinations thereof.

In addition to, or alternatively to, the different liquid non-halogenated flame retardant described above, the incorporation of different liquid halogenated flame retardant can also or alternatively be used, e.g., tris(chloropropyl) phosphate, tris(dichloroisopropyl) phosphate and 2,2-bis(chloromethyl)trimethylene bis(bis(2-chloroethyl) phosphate), and the like, and mixtures thereof.

The polymer of the present disclosure preferably comprises at least one non halogen-containing cyclic phosphonate ester of the general formula (I) herein. The ratio of weight percents in the polymer herein of cyclic phosphonate ester of the general formula (I) to total different liquid flame retardant(s) can vary, and can range from about 5/95 to about 95/5, respectively, and preferably from about 20/80 to about 80/20, respectively, and most preferably from about 25/75 to about 75/25, respectively.

As the antioxidants, may be mentioned phosphorus compounds such as trivalent phosphorous compounds including triphenyl phosphite, tris(nonylphenyl)phosphite, diphenylisodecyl phosphite, bis(2,4-di-tert-butylphenyl)pentaerythritol diphosphite, tetrakis(2,4-di-tert-butylphenyl)-4,4-diphenylene phosphonite, etc.; hydroquinone compounds such as hydroquinone, 2,5-di-tert-butylhydroquinone, octylhydroquinone, 2,5-tert-amylhydroquinone, etc.; phenol compounds; amine compounds; sulfur compounds; and the like.

As the inorganic fillers, may be mentioned mica, talc, alumina and the like.

As the antistatics, may be mentioned cationic surfactants, non-ionic surfactants and the like.

As the ultraviolet absorbers, may be mentioned benzophenone compounds, salicylate compounds, benzotriazole compounds and the like.

As the lubricants, may be mentioned fatty acid compounds, fatty amide compounds, ester compounds, alcohol compounds and the like.

For producing the polymer composition of the present disclosure, there is no particular limitation on the order or method of blending the respective components. For example, the polymer composition may be produced by mixing, melting and kneading the flame retardant, the polymer and other additives for polymer, as required, using known methods. For mixing, melting and kneading, general-use apparatus such as a single-screw extruder, a double-screw extruder, a Banbury mixer, a kneader mixer and the like may be used singly or in combination.

If the polymer is produced by bulk polymerization, the flame retardant may be added at the feeding of a monomer, at the last stage of bulk polymerization reaction or at the molding of the resulting polymer.

The obtained polymer (composition) can be further molded by a known method to obtain a molded product in a desired form, for example, a plate, sheet or film form.

The cyclic phosphonate ester of the general formula (I) of the present disclosure may contain minor levels of impurities derived from by-products and unreacted materials during production, but may be used as flame retardants without being further purified so long as the impurities do not affect the flame retardancy of the polymer made from the inventive composition(s) herein. Such impurity level is below about 2wt%, preferably less than 1wt.% and most preferably less than 0.5wt% with an optional lower endpoint to such ranges of 0.001 wt.%. In one embodiment herein the cyclic phosphonate ester of the general formula (I) made by the process herein can have an absence of any impurity.

The polymer of the present disclosure can include one or more species of cyclic phosphonate ester of the general formula (I).

### ABSTRACT

There is provided herein a process for preparing cyclic phosphonate ester comprising reacting a glycol with at least one of phosphonic acid and phosphinic acid in the presence of a solvent.

### EXAMPLE

To a solution of phosphorous acid H₃PO₃ (50%, 114.8 g, 700 mmol) in toluene (1.4 L) neopentylglycol (73.64 g, 700 mmol) was added. The reflux system was equipped with a Dean-Stark trap prefilled with toluene. The reaction mixture was refluxed for 18h. The reaction mixture was allowed to cool down to room temperature. The solution was concentrated under high vacuum to give the expected cyclic neopentylglycol phosphonate ester at 100% yield . Phosphorus NMR ³¹P showed a single peak at 2.99 ppm (d).

## Claims

1. A process for preparing cyclic phosphonate ester of the general formula (I): 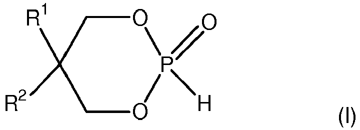 wherein R¹ and R² are each independently selected from linear or branched alkyl groups containing up to about 10 carbon atoms, optionally containing one or more heteroatom substituents, the process comprising:
reacting a glycol of the general formula (II): 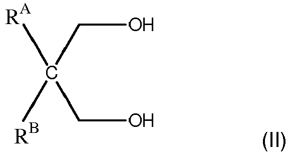 wherein R^{A} and R^{B}are each independently a linear or branched alkyl group containing up to about 10 carbon atoms, optionally containing one or more heteroatom substituents with at least one of phosphonic acid and phosphinic acid in the presence of a solvent, wherein if phosphonic acid is used, cyclic phosphonate ester of the general formula (I) is formed, and if phosphinic acid is used a cyclic phosphonite ester of the general formula (III): 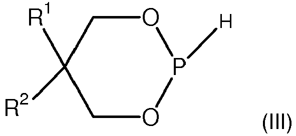 is formed,
wherein R¹ and R² are as defined, and wherein any cyclic phosphonite ester of the general formula (III) is further exposed to air to produce cyclic phosphonate ester of the general formula (I),
wherein the amount of the solvent used is 35 to 70 wt % with respect to the glycol compound (II).

2. The process of Claim 1 wherein glycol (II) is reacted with only phosphonic acid.

3. The process of Claim 1 wherein R¹ and R² of general formula (I) are each independently selected from the group consisting of methyl, ethyl, n-propyl, n-butyl, n-pentyl, n-hexyl, iso-propyl, iso-butyl, sec-butyl, tert-butyl, iso-pentyl, tert-pentyl, neo-pentyl and iso-hexyl.

4. The process of Claim 1 wherein R¹ and R² of general formula (I) are each linear alkyl groups having from 1 to 4 carbon atoms.

5. The process of Claim 1 wherein glycol of the general formula (II) is neopentylene glycol.

6. The process of Claim 1 wherein the reaction of glycol of the general formula (II) with at least one of phosphonic acid and phosphinic acid is conducted by an esterification reaction in a Dean-Stark apparatus and wherein the solvent is toluene.

7. The process of Claim 1 wherein the glycol of the general formula (II) is neopentylene glycol which is reacted with only phosphonic acid in an esterification reaction in a Dean-Stark apparatus wherein the solvent is toluene.

8. The process of Claim 1 wherein the reaction is conducted using equimolar amounts of glycol of the general formula (II) and at least one of phosphonic acid and phosphinic acid.

9. The process of Claim 1 wherein the reaction is conducted without any base.

10. The process of Claim 1 wherein the cyclic phosphonate ester of the general formula (I) produced is neopentyleneglycol-H-phosphonate.

11. The process of Claim 1 wherein the reaction produces only cyclic phosphonate ester of the general formula (I) without any byproduct.

12. The process of Claim 1 wherein following the reaction the solvent is evaporated under reduced pressure and is recycled to the process.

## Patentansprüche

1. Verfahren zur Herstellung von cyclischen Phosphonatestern der allgemeinen Formel (I): 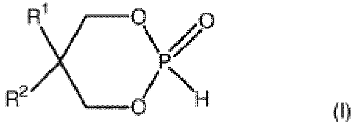 wobei R¹ und R² jeweils unabhängig voneinander ausgewählt sind aus linearen oder verzweigten Alkylgruppen enthaltend bis zu 10 Kohlenstoffatomen, optional enthaltend einen oder mehrere Heteroatom Substituenten, das Verfahren umfassend:
Reagieren eines Glykols der allgemeinen Formel (II): 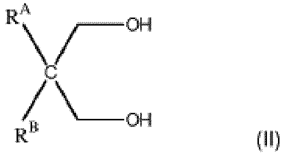 wobei R^{A} und R^{B} jeweils unabhänig voneinander eine lineare oder verzweigte Alkylgruppe, enthaltend bis zu 10 Kohlenstoffatomen, sind, optional enthaltend einen oder mehrere Heteroatom Substituenten mit zumindest einem von Phosphonsäure und Phosphinsäure in der Gegenwart eines Lösungsmittels, wobei der cyclische Phosphonatester der allgemeinen Formel (I) gebildet wird, wenn Phosphonsäure verwendet wird und wenn Phosphinsäure verwendet wird, der cyclische Phosphonitester der allgemeinen Formel (III): 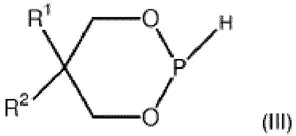 gebildet wird,
wobei R¹ und R² wie beschrieben sind, und wobei jeder cyclische Phosphonitester der allgemeinen Formel (III) ferner Luft ausgesetzt wird, um cyclische Phosphonatester der allgemeinen Formel (I) herzustellen,
wobei die Menge des verwendeten Lösungsmittels 35 bis 70 Gew.%, bezogen auf die Glykolkomponente (II), beträgt.

2. Verfahren nach Anspruch 1, wobei Glykol (II) nur mit Phosphinsäure reagiert.

3. Verfahren nach Anspruch 1, wobei R¹ und R² der allgemeinen Formel (I) jeweils unabhängig voneinander ausgewählt werden aus der Gruppe bestehend aus Methyl, Ethyl, n-Propyl, n-Butyl, n-Pentyl, n-Hexyl, Iso-Propyl, Iso-Butyl, Sec-Butyl, Tert-Butyl, Iso-Pentyl, Tert-Pentyl, Neo-Pentyl und Iso-Hexyl.

4. Verfahren nach Anspruch 1, wobei R¹ und R² der allgemeinen Formel (I) jeweils unabhängig voneinander lineare Alkylgruppen mit 1 bis 4 Kohlenstoffatomen sind.

5. Verfahren nach Anspruch 1, wobei Glykol der allgemeinen Formel (II) Neopentylenglykol ist.

6. Verfahren nach Anspruch 1, wobei die Reaktion von Glykol der allgemeinen Formel (II) mit zumindest einem von Phosphonsäure und Phosphinsäure über eine Veresterungsreaktion in einer Dean-Stark Vorrichtung durchgeführt wird, wobei das Lösungsmittel Toluol ist.

7. Verfahren nach Anspruch 1, wobei das Glykol der allgemeinen Formel (II) Neopentylenglykol ist, welches nur mit Phosphinsäure in einer Veresterungsreaktion in einer Dean-Stark Vorrichtung reagiert, wobei das Lösungsmittel Toluol ist.

8. Verfahren nach Anspruch 1, wobei die Reaktion mit dem Gebrauch äquimolarer Mengen von Glykol der allgemeinen Formel (II) und zumindest einem von Phosponsäure und Phospinsäure durchgeführt wird.

9. Verfahren nach Anspruch 1, wobei die Reaktion ohne Base durchgeführt wird.

10. Verfahren nach Anspruch 1, wobei der cyclische Phosphonatester, der nach der allgemeinen Formel (I) hergestellt wird, Neopentylenglycol-H-phosponat ist.

11. Verfahren nach Anspruch 1, wobei die Reaktion nur cyclische Phosponatester der allgemeinen Formel (I) ohne jegliche Nebenprodukte herstellt.

12. Verfahren nach Anspruch 1, wobei das Lösungsmittel im Anschluss an die Reaktion unter vermindertem Druck verdampft und in den Prozess zurückgeführt wird.

## Revendications

1. Procédé de préparation d'ester de phosphonate cyclique de formule générale (I) : 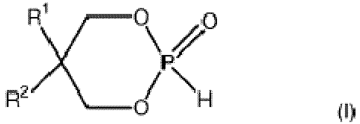 dans lequel R¹ et R² sont chacun indépendamment choisis parmi des groupes alkyle linéaires ou ramifiés contenant jusqu'à environ 10 atomes de carbone, contenant facultativement un ou plusieurs substituants hétéroatomes, le procédé comprenant :
la réaction d'un glycol de formule générale (II) : 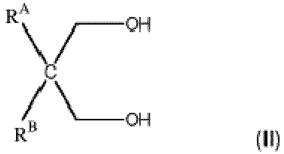 dans lequel R^{A} et R^{B} sont chacun indépendamment un groupe alkyle linéaire ou ramifié contenant jusqu'à environ 10 atomes de carbone, contenant facultativement un ou plusieurs substituants hétéroatomes avec au moins l'un d'un acide phosphonique et un acide phosphinique en présence d'un solvant, dans lequel, si un acide phosphonique est utilisé, un ester de phosphonate cyclique de formule générale (I) est formé, et si un acide phosphinique est utilisé, un ester de phosphonite cyclique de formule générale (III) : 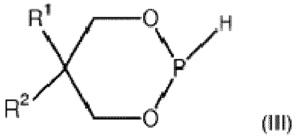 est formé,
dans lequel R¹ et R² sont tels que définis, et dans lequel un ester de phosphonite cyclique de formule générale (III) est en outre exposé à l'air pour produire un ester de phosphonate cyclique de formule générale (I),
dans lequel la quantité du solvant utilisé est de 35 à 70 % en poids par rapport au composé de glycol (II).

2. Procédé de la revendication 1 dans lequel le glycol (II) réagit uniquement avec un acide phosphonique.

3. Procédé de la revendication 1 dans lequel R¹ et R² de formule générale (I) sont chacun indépendamment choisis dans le groupe constitué de méthyle, éthyle, n-propyle, n-butyle, n-pentyle, n-hexyle, iso-propyle, iso-butyle, sec-butyle, tert-butyle, iso-pentyle, tert-pentyle, néo-pentyle et iso-hexyle.

4. Procédé de la revendication 1 dans lequel R¹ et R² de formule générale (I) sont chacun des groupes alkyle linéaires ayant de 1 à 4 atomes de carbone.

5. Procédé de la revendication 1 dans lequel le glycol de formule générale (II) est le néopentylène glycol.

6. Procédé de la revendication 1 dans lequel la réaction d'un glycol de formule générale (II) avec au moins l'un d'un acide phosphonique et d'un acide phosphinique est conduite par une réaction d'estérification dans un appareil Dean-Stark et dans lequel le solvant est le toluène.

7. Procédé de la revendication 1 dans lequel le glycol de formule générale (II) est le néopentylèneglycol qui réagit uniquement avec un acide phosphonique dans une réaction d'estérification dans un appareil de Dean-Stark dans lequel le solvant est le toluène.

8. Procédé de la revendication 1 dans lequel la réaction est conduite en utilisant des quantités équimolaires de glycol de formule générale (II) et au moins l'un d'un acide phosphonique et d'un acide phosphinique.

9. Procédé de la revendication 1 dans lequel la réaction est conduite sans aucune base.

10. Procédé de la revendication 1 dans lequel l'ester de phosphonate cyclique de formule générale (I) produit est le néopentylèneglycol-H-phosphonate.

11. Procédé de la revendication 1 dans lequel la réaction produit uniquement un ester de phosphonate cyclique de formule générale (I) sans aucun sous-produit.

12. Procédé de la revendication 1 dans lequel, après la réaction, le solvant est évaporé sous pression réduite et est recyclé dans le procédé.
